# EUROPEAN PATENT APPLICATION

(11) **EP 4 518 007 A1**
(43) Date of publication of application: **05.03.2025**
(21) Application number: 24764200.2
(22) Date of filing: 28.02.2024
(51) Int. Cl.: H01M 50/536, H01M 50/54, B23K 20/10, B23K 37/02

(54) **WELDING APPARATUS**

(30) Priority: 02.03.2023 KR 20230027480
(71) Applicant: LG Energy Solution, Ltd., Seoul 07335 (KR)
(72) Inventor: JUNG, Hun Bum, Daejeon 34122 (KR)
(74) Representative: Goddar, Heinz J.
(86) International application number: PCT/KR2024/002582
(87) International publication number: WO 2024/181801

(57) **Abstract**

A welding device according to one example of the present invention may comprise: a welding support part including a first support part having an anvil on which a welding object is seated, a second support part having a pressure measuring part measuring a pressure transmitted from the first support part, and a guide part guiding movements of the first support part and the second support part, respectively; a welding part provided to pressurize the welding object and to apply vibration to the welding object; and a control part monitoring the measured pressure value of the pressure measuring part.

## Description

### Technical Field

The present invention relates to a welding device, and more specifically, relates to an ultrasonic welding device for electrode lead tabs, wherein the welding device can measure, in a welding process of a welding object such as an electrode lead tab, a pressure for pressurizing the welding object in real time.

This application claims the benefit of priority based on Korean Patent Application No. 10-2023-0027480 dated March 2, 2023, the disclosure of which is incorporated herein by reference in its entirety.

### Background Art

Recently, battery cells have been widely used not only in small devices such as portable electronic devices, but also in medium-to-large devices such as automobiles or power storage devices. When they are used in such medium-to-large devices, many battery cells are electrically connected for increasing capacity and output. Particularly, pouch-type battery cells are often used in such medium-to-large devices due to an advantage that storage and lamination are easy.

The pouch-type battery cell comprises a cell case (pouch), an electrode assembly, and a lead tab. The electrode assembly is accommodated inside the cell case. The electrode assembly is configured by alternately laminating negative electrode plates and positive electrode plates via separators.

The lead tab is electrically connected to the electrode assembly and protrudes out of the cell case, where the lead tab comprises a positive electrode tab and a negative electrode tab and is provided as a pair.

The lead tab is formed through a tab bundle welding process.

Through the tab bundle welding process, a positive electrode tab bundle connected to a plurality of positive electrode plates constituting the electrode assembly can be welded to form one positive electrode tab, and a negative electrode tab bundle connected to a plurality of negative electrode plates constituting the electrode assembly can be welded to form one negative electrode tab.

The tab bundle welding process is performed by a welding device.

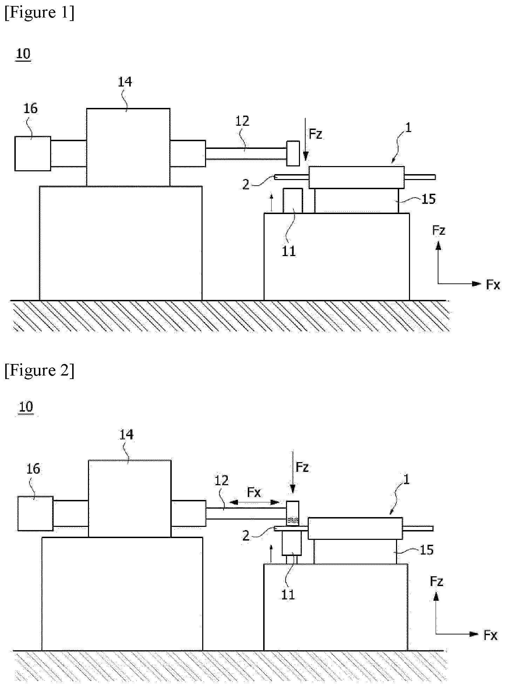

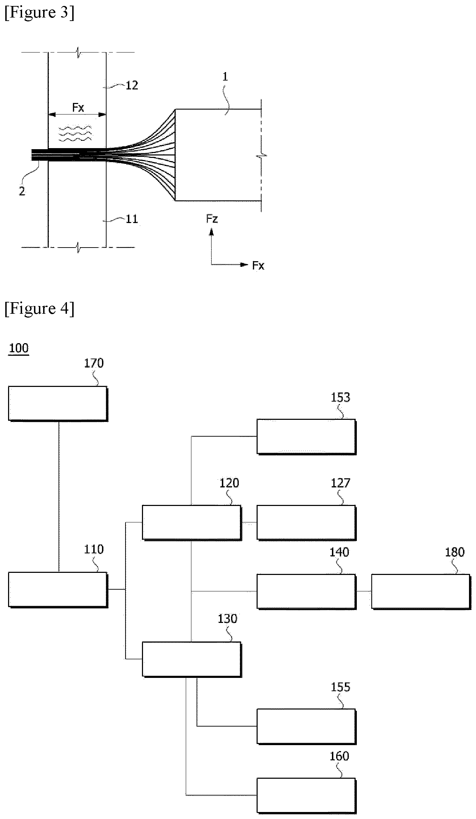

Figure 1 is a configuration diagram of a welding device performing a conventional tab bundle welding process. Figures 2 and 3 are diagrams for explaining a process in which a conventional welding device welds a tab bundle of a battery cell.

As shown in Figures 1 and 2, a typical welding device (10) comprises an anvil (11), a horn (12), a pressurizing part (14), and a vibration generating part (16).

The battery cell (1) is seated on a seating part (15), and the tab bundle (2) is disposed to be placed on the anvil (11). The anvil (11) supports the tab bundle (2). The anvil (11) is disposed at the bottom of the horn (12). The tab bundle (2) is located between the horn (12) and the anvil (11).

The horn (12) is disposed at the top of the anvil (11), and the horn (12) is disposed coaxially with the anvil (11) in a laminating direction (Fz) of the lead tabs. The horn (12) is connected to the pressurizing part (14) and the vibration generating part (16).

The pressurizing part (14) provides a pressure of the horn (12) in the laminating direction (Fz) of the tab bundle (2). Upon operation of the pressurizing part (14), the horn (12) descends in the laminating direction (Fz) of the tab bundle (2) and pressurizes the tab bundle (2) placed on the anvil (11).

The vibration generating part (16) provides vibration to the horn (12) in a vibration transmission direction (Fx) in a state where the horn (12) pressurizes the tab bundle (2) in the laminating direction (Fz) of the tab bundle (2). The vibration transmission direction (Fx) is a direction perpendicular to the laminating direction (Fz) of the tab bundle (2). Also, the vibration generating part (16) is a device generating ultrasonic vibration.

As shown in Figure 3, upon operation of the vibration generating part (16), the horn (12) transmits vibration to the tab bundle (2) while vibrating in the vibration transmission direction (Fx), thereby welding the tab bundle (2).

In general, the welding quality of the tab bundle (2) varies depending on the pressure that the horn (12) pressurizes the tab bundle (2). Conventionally, in the welding process, it was difficult to accurately measure the pressure provided to the tab bundle (2) in real time, so that the welding quality could not be managed in real time.

### Disclosure

### Technical Problem

In a welding process of a welding object such as an electrode lead tab, the present invention is intended to provide a welding device capable of measuring a pressure pressurizing the welding object in real time, and adjusting the pressure applied to the welding object based on the measured pressure.

Also, the present invention is intended to provide a welding device capable of measuring the maximum pressure applied to a welding object upon a welding process, and adjusting the pressure applied to the welding object based on the same.

In addition, the present invention is intended to provide a welding device capable of improving a welding quality by pressurizing a welding object at a pressure optimized for the welding object.

### Technical Solution

A welding device according to one example of the present invention comprises a welding support part, a welding part, and a control part.

Specifically, the welding device may comprise a welding support part including a first support part including an anvil on which a welding object is seated, a second support part including a pressure measuring part measuring a pressure transmitted from the first support part, and a guide part guiding movements of the first support part and the second support part, respectively, a welding part provided to pressurize the welding object and to apply vibration to the welding object, and a control part monitoring the measured pressure value of the pressure measuring part.

The control part may provide a warning alarm to the outside when the maximum pressure measured by the pressure measuring part is out of a preset setting pressure range.

Also, the control part may be provided to adjust a pressure, in which the welding part pressurizes the welding object, when the maximum pressure measured by the pressure measuring part is out of a preset setting pressure range.

In addition, the first support part may be provided to be movable in a direction closer to or farther away from the second support part.

Furthermore, the welding support part may further comprise an elastic part for elastically connecting the first support part and the second support part.

The guide part may comprise at least one first guide part connected to the first support part and guiding movement of the first support part, at least one second guide part connected to the second support part and guiding movement of the second support part, and a fixing part in which the at least one first guide part and the at least one second guide part are mounted to be spaced apart from each other.

Also, the first guide part and the second guide part may be linear guides.

In addition, the welding support part may comprise a pusher member provided on the first support part and disposed to contact the pressure measuring part when the welding part pressurizes the welding object on the first support part.

Furthermore, the second support part may comprise an insertion groove into which the first support part is inserted upon movement of the first support part, and a seating groove provided on the bottom surface of the insertion groove and into which the pressure measuring part is mounted.

Also, the first support part may comprise an insertion part provided to be inserted into the insertion groove, and a locking part having a width greater than that of the insertion groove and provided to be caught on the top of the second support part.

In addition, the first support part may be provided with a mounting groove at the bottom of the insertion part to face the seating groove, where in the mounting groove, a pusher member pressurizing the pressure measuring part when the welding part pressurizes the welding object on the first support part may be installed.

Furthermore, the first support part may be provided so that the insertion part and the locking part are integrally formed, and it is unevenly coupled to the second support part.

Also, the welding support part may further comprise an elevating part for raising and lowering the second support part, and may be provided so that the first support is linked to the second support to be raised and lowered together upon raising and lowering the second support by the elevating part.

In addition, the elevating part may comprise a roller installed to enable idling on the second support, a rail contacting the roller to guide the idling of the roller, and having a low point portion and a high point portion having a height higher than the low point portion, and a rail operating part for moving the rail so that the roller is located at the high point portion or the low point portion.

Furthermore, the elevating part may be provided so that the roller pushes the second support part up toward the first support part by moving the rail for the roller to contact the high point portion of the rail before the welding process.

Also, the elevating part may lower the second support part to be away from the first support part by moving the rail for the roller to contact the low point portion of the rail after completion of the welding process.

In addition, the control part may be provided to output the maximum pressure, and a pressure graph over time, as measured upon the welding process, based on the pressure data.

Furthermore, the welding part may comprise a vibration generating part, a horn connected to the vibration generating part, and contacting the welding object to transmit vibration to the welding object, and a pressurizing member installed on the horn, and providing a pressurizing force to the horn so that the horn pressurizes the welding object.

### Advantageous Effects

As discussed above, the welding device according to at least one example of the present invention has the following effects.

In a welding process of a welding object, it is possible to measure the pressure that a horn pressurizes the welding object in real time, and it is possible to confirm the maximum pressure that the horn pressurizes the welding object from pressure data over the course of the process time. Accordingly, a worker can monitor a welding quality according to the measured maximum pressure.

The worker can reset the operating conditions of the welding part if the maximum pressure measured while waiting for welding is out of the set value range. For this reason, by welding the welding object at a pressure optimized for the welding object, it is possible to improve the welding quality of the welding object.

### Description of Drawings

Figure 1 is a configuration diagram of a welding device performing a conventional tab bundle welding process.
Figures 2 and 3 are diagrams for explaining a process in which a conventional welding device welds a tab bundle of a battery cell.
Figure 4 is a configuration diagram of a welding device according to one example of the present invention.
Figure 5 schematically shows an arrangement diagram of a welding support part and a welding part for a welding object according to one example of the present invention.
Figure 6 is an exploded perspective diagram of a welding support part according to one example of the present invention;
Figure 7 is a combined perspective diagram of a welding support part according to one example of the present invention.
Figure 8 is a connection state diagram of a welding support part and an elevating part according to one example of the present invention.
Figure 9 is an operating state diagram of a welding support part upon operation of an elevating part according to one example of the present invention.
Figure 10 schematically shows a pressure graph displayed on a control part according to one example of the present invention.

### Mode for Invention

Hereinafter, with reference to the accompanying drawings, a welding device according to one example of the present invention will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

The present invention is intended to provide a welding device capable of measuring a pressure applied to a welding object in real time upon a welding process, and obtaining a pressure value measured over time.

Figure 4 is a configuration diagram of a welding device according to one example of the present invention.

As shown in Figure 4, the welding device (100) related to one example of the present invention may comprise a welding support part (110), a pressure measuring part (140), a welding part (170), and a control part (180).

The welding support part (110) supports a welding object (2) upon a welding process of the welding object (2). The welding object (2) is pressurized by the welding support part (110) and the welding part (170). The welding part (170) pressurizes the welding object (2) and provides vibration to the welding object (2).

In this document, the weld object (2) may be a tab bundle electrically connected to an electrode assembly.

The pressure measuring part (140) measures the pressure applied to the welding support part (110) when the welding part (170) pressurizes the welding object (2). The control part (180) may monitor the measured pressure value over time upon the welding process, based on the pressure data of the pressure measuring part (140).

In the present invention, the pressure measuring part (140) may measure a pressurizing force on the welding object (2) in real time by the structural characteristics of the welding support part (110).

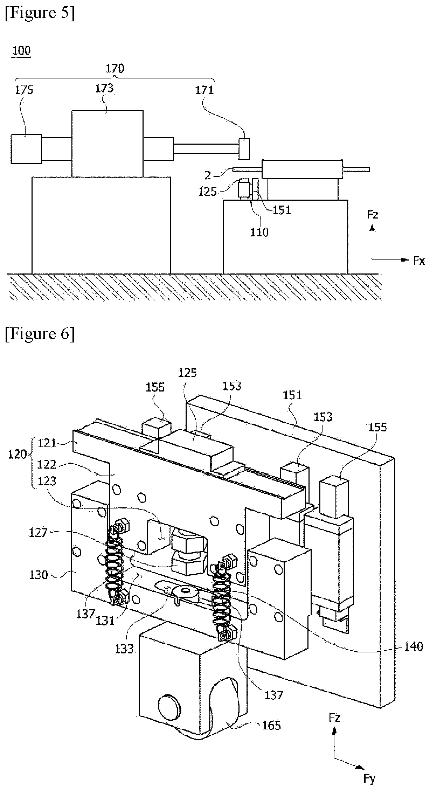

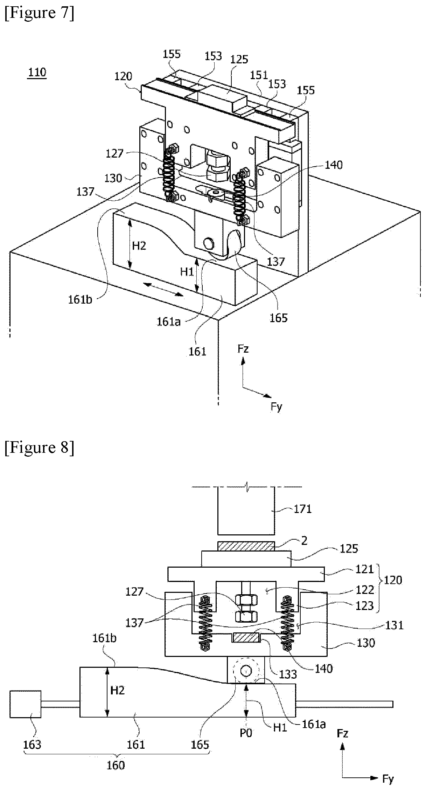

Hereinafter, the welding support part (110) will be described with reference to Figures 5 to 7. Figure 5 is an arrangement diagram of a welding support part and a welding part for a welding object. Figure 6 is an exploded perspective diagram of a welding support part, and Figure 7 is a combined perspective diagram of a welding support part.

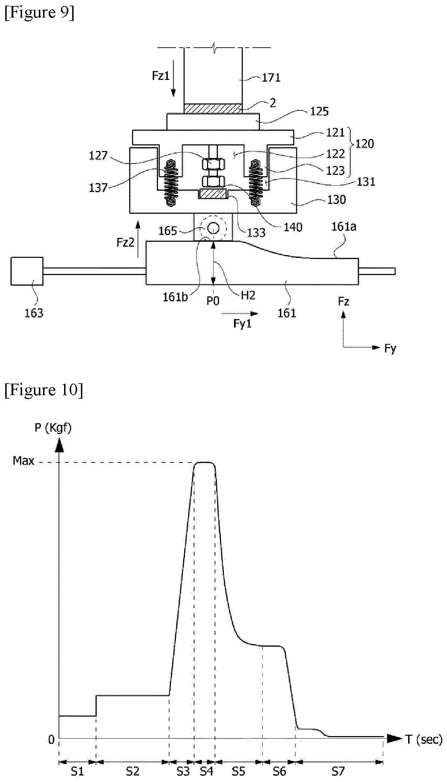

In addition, Figure 8 is a connection state diagram of a welding support part and an elevating part. Figure 9 is an operating state diagram of a welding support part upon operation of an elevating part.

Referring to Figures 5 to 7, the welding support part (110) is disposed at the bottom of the welding part (170). Also, the welding support part (110) may comprise a first support part (120), a pusher member (127), a second support part (130), and a guide part (150). In addition, the welding support part (110) may comprise an elastic part (137) and an elevating part (160).

The guide part (150) may comprise a fixing part (151), a first guide part (153), and a second guide part (155).

The fixing part (151) may be provided such that at least one first guide part (153) and at least one second guide part (155) are mounted to be spaced apart from each other. The first guide part (153) guides movement of the first support part (120), and the second guide part (155) guides movement of the second support part (130).

The first support part (120) may be connected to the second support part (130) to be movable in a direction closer to or farther away from the second support part (130). The first support part (120) is coupled to the first guide part (153). The first guide part (153) may be installed on the side of the first support part (120). The first guide part (153) guides movement of the first support part (120) in a first axial direction (Fz). As one example, the first guide part (153) may be a linear guide.

The first support part (120) is disposed at the bottom of the horn (171) of the welding part (170). The first support part (120) has an anvil (125) on which the welding object (2) is seated. The welding object (2) is placed on the anvil (125). The anvil (125) is installed at the top of the first support part (120).

The first support part (120) may have a locking part (121) and an insertion part (122). In the first support part (120), an insertion part (122) and a locking part (121) may be formed integrally. The first support part (120) may be provided to be unevenly coupled to the second support part (130).

The locking part (121) may have a larger width than an insertion groove (131) and the insertion part (122). The locking part (121) may be provided to be caught on the top of the second support part (130). The anvil (125) is installed on the upper surface of the locking part (121).

The insertion part (122) is provided to be inserted into the insertion groove (131) of the second support part (130). The insertion part (122) has a width smaller than the width of the insertion groove (131).

A mounting groove (123) is provided at the bottom of the insertion part (122). The mounting groove (123) is provided at the bottom of the insertion part (122) to face a seating groove (133). Specifically, the mounting groove (123) faces the seating groove (133), but is provided to be stepped on the lower surface of the insertion part (122) in the upper direction (Fz2) of the first axial direction (Fz).

A pusher member (127) is installed in the mounting groove (123). The pusher member (127) is for pressurizing the pressure measuring part (140) when the welding part (170) pressurizes the welding object (2) on the first support part (120).

The pusher member (127) is bolted to the mounting groove (123). The pusher member (127) may be installed in the mounting groove (123) of the first support part (120) so that its height is adjustable according to the installation height of the pressure measuring part (140) installed in the seating groove (133).

The second support part (130) comprises a pressure measuring part (140) measuring the pressure transmitted from the first support part (120).

The second support part (130) is coupled to the lower portion of the first support part (120). The second support part (130) is elastically connected to the first support part (120) by an elastic part (137).

The second support part (130) is disposed at the bottom of the first support part (120). The second support part (130) has an insertion groove (131) whose top is open in the first axial direction (Fz). The first support part (120) may be connected to the second support part (130) to be inserted into the insertion groove (131) of the second support part (130) in the first axial direction (Fz).

The second support part (130) has a stepped seating groove (133) at the bottom surface of the insertion groove (131) in the lower direction (Fz1) of the first axial direction (Fz). A pressure measuring part (140) is installed in the seating groove (133).

The second support part (130) is connected to the fixing part (151) by a second guide part (155). At least one second guide part (155) may be installed on the side of the second support part (130). The second guide part (155) guides movement of the second support part (130) in the first axial direction (Fz). As one example, the second guide part (155) may be a linear guide.

As shown in Figures 5 and 6, the pressure measuring part (140) is accommodated in the seating groove (133) of the second support part (130). The pressure measuring part (140) is installed on the second support part (130) to contact the first support part (120). A load cell may be used as the pressure measuring part (140).

Also, the pressure measuring part (140) is provided to measure the pressure applied to the welding support part (110) upon the welding process. That is, the pressure measuring part (140) measures the pressure transmitted from the first support part (120) to the second support part (130) when the welding part (170) pressurizes the first support part (120) with the welding object (2) interposed therebetween.

Referring to Figures 8 and 9, the welding support part (110) is provided such that when the second support part (130) is raised and lowered by the elevating part (160), the first support part (120) is linked to the second support part (130) to be raised and lowered together.

As shown in Figure 8, the elevating part (160) may comprise a rail (161), a rail operating part (163), and a roller (165). The elevating part (160) performs a function of raising or lowering the first and second support parts (120, 130) in the first axial direction (Fz) according to the welding process.

Also, the elevating part (160) may be connected to the lower end of the second support part (130). The elevating part (160) allows the first support part (120) to be raised and lowered in the first axial direction (Fz) in conjunction with the second support part (130).

Before the welding process, the elevating part (160) operates so that the roller (165) pushes the second support part (130) up toward the first support part (120) by moving the rail (161) for the roller (165) to contact a high point portion (161b) of the rail (161).

After completion of the welding process, the elevating part (160) may lower the second support part (130) to be away from the first support part (120) by moving the rail (161) for the roller (165) to contact the low point portion (161a) of the rail (161).

The rail (161) is disposed at the bottom of the second support part (130). The rail (161) is connected to the second support part (130) by the roller (165). The rail (161) moves in the second axial direction (Fy) by the rail operating part (163). Here, the second axial direction (Fy) is a direction perpendicular to the first axial direction (Fz).

The rail (161) contacts the roller (165) to guide the idling of the roller (165). The rail (161) has a low point portion (161a) and a high point portion (161b). The rail (161) has a rail surface in which a low point portion (161a) and a high point portion (161b) are connected at a predetermined curvature. The height (H2) of the high point portion (161b) is higher than the height (H1) of the low point portion (161a).

The rail operating part (163) is installed on the rail (161). The rail operating part (163) moves the rail (161), whereby the roller (165) is positioned at the high point portion (161b) or the low point portion (161a). The rail operating part (163) may move the rail (161) in the second axial direction (Fy) perpendicular to the first axial direction (Fz).

The roller (165) is installed on the second support part (130). The roller (165) is disposed on the rail (161) to contact the rail. The roller (165) is seated on the rail (161) to be movable up and down along the first axial direction (Fz) at the reference position (P0). The roller (165) contacts the rail (161), and moves in the first axial direction (Fz) along the curvature of the rail (161) while idling when the rail (161) moves in the second axial direction (Fy). The reference position (P0) is a position disposed on the low point portion (161a), which may be the position of the welding support part (110).

As shown in Figure 5, the welding part (170) is disposed at the top of the first support part (120). The welding part (170) pressurizes the welding object (2) in the first axial direction (Fz) perpendicular to a welding object surface of the welding object (2), and transmits vibration to the welding object surface.

The welding part (170) may comprise a horn (171), a pressurizing member (173), and a vibration generating part (175). The horn (171) is connected to the pressurizing member (173) and the vibration generating part, and the horn (171) contacts the welding object (2) to transmit vibration to the welding object (2).

The pressurizing member (173) is installed on the horn (171), thereby being provided to pressurize the horn (171) in the first axial direction (Fz). The first axial direction (Fz) is a direction perpendicular to the welding object surface of the welding object (2). The vibration generating part is installed on the horn (171), and transmits vibration in a third axial direction (Fx). The third axial direction (Fx) is a direction perpendicular to the first axial direction (Fz).

The control part (180) may monitor the measured pressure value of the pressure measuring part (140). The control part (180) may provide a warning alarm to the outside when the maximum pressure measured by the pressure measuring part (140) is out of a preset setting pressure range.

The setting pressure range may be 0.9 times to 1.1 times the set pressure of the welding object (2). The set pressure is a pressure that can be set in advance by the worker, which can vary depending on the welding object (2), and thus, in this example, specific values for the set pressure will be omitted.

If the maximum pressure measured by the pressure measuring part (140) is out of the preset setting pressure range, the control part (180) may adjust the pressure that the welding part (170) pressurizes the welding object (2). Based on the pressure data, the control part (180) may output the maximum pressure measured upon the welding process and a pressure graph over time.

Hereinafter, the welding process will be described.

The welding object (2) is placed on the anvil (125). Before the welding process, the welding support part (110) and the welding part (170) are operated as follows.

The welding support part (110) is operated so that the first and second support parts (120, 130) are raised and lowered in the first axial direction (Fz) by the elevating part (160). The first and second support parts (120, 130) are linked to the elevating part (160), whereby the position in the first axial direction (Fz) is adjusted.

Before the welding process, the rail operating part (163) moves the rail (161) in the Fy1 direction (direction moving from the low point portion to the high point portion) of the second axial direction (Fy) so that the high point portion (161b) of the rail (161) is in contact with the roller (165). As the rail (161) moves in the Fy1 direction of the second axial direction (Fy), the roller (165) rides on the rail surface of the rail (161) and pushes the second support part (130) up in the first axial direction (Fz).

The first and second support parts (120, 130) are linked to the roller (165) to move in the first axial direction (Fz). At this time, the second support part (130) is raised and lowered (in the Fz2 direction) along the first axial direction (Fz) along with at least one second guide part (155). The first support part (120) is linked to the second support part (130) to be raised and lowered (Fz2 direction) along the first axial direction (Fz) along with at least one first guide part (153).

Next, before the welding process, the welding part (170) is positioned in contact with the welding object (2) while the horn (171) is lowered (Fz1) in the first axial direction (Fz). In this instance, the horn (171) is in contact with the upper surface of the welding object (2), and the anvil (125) is in contact with the lower surface of the welding object (2). The horn (171) and the anvil (125) are positioned coaxially along the first axial direction (Fz).

The horn (171) pressurizes the anvil (125) with the welding object (2) interposed therebetween. Upon the welding process, the horn (171) provides the pressure to the welding object (2) while descending in the Fz1 direction of the first axial direction (Fz) by the pressurizing member (173).

The pressure measuring part (140) measures the pressure that the horn (171) pressurizes the welding object (2) in real time in the welding process of the welding object (2). Accordingly, the present invention can secure the maximum pressure that the horn (171) pressurizes the welding object (2) when waiting for welding, from the pressure data over the course of the process time.

Figure 10 schematically shows a pressure graph displayed on a control part (180).

As shown in Figure 10, the control part (180) may monitor the measured pressure value (P) over time (T) upon the welding process, based on the pressure data of the pressure measuring part (140).

The control part (180) can display the measured maximum pressure and a pressure graph. The worker can monitor the welding quality according to the measured maximum pressure through the control part (180).

A first section (S1) of the pressure graph is a state before the horn (171) contacts the welding object (2). In the first section (S1), the welding object (2) is in a state before being pressurized by the horn (171), where the pressure value measured by the pressure measuring part (140) is 0.

A second section (S2) of the pressure graph is a section in which the elevating part (160) is raised and lowered in the first axial direction (Fz).

In the second section (S2), the second support part (130) is linked to the roller (165) of the elevating part (160) to be raised and lowered in the first axial direction (Fz). At this time, the pressure measuring part (140) mounted on the second support part (130) is in contact with the pusher member (127) installed on the first support part (120).

The pressure value of the second section (S2) is a pressure value measured when the pressure measuring part (140) pressurizes the pusher member (127) by the force that the elevating part (160) pushes the second support part (130) up.

A third section (S3) of the pressure graph is a section in which the horn (171) contacts the welding object (2) while descending in the first axial direction (Fz), and pressurizes the welding object (2). The pressure value of the third section (S3) is a pressure value measured when the horn (171) pressurizes the welding object (2) while descending in the first axial direction (Fz) before welding. The pressure value of the third section (S3) increases over time.

A pressure value of a fourth section (S4) is a pressure value measured when the horn (171) pressurizes the welding object (2) while waiting for welding. The measured maximum pressure is the highest value among the pressure values measured in the third section (S3) and the fourth section (S4). During the welding process, the position of the horn (171) is the position in contact with the welding object (2) in the fourth section (S4).

The control part (180) may provide a warning alarm when the measured maximum pressure is out of a preset setting pressure range. If the maximum pressure measured upon waiting for welding is out of the set value range, the worker can reset the operating conditions of the welding part (170).

A fifth section (S5) is a section in which the horn (171) welds the welding object (2). The vibration generating part (175) provides vibration to the horn (171). The horn (171) transmits vibration to the welding object (2). The vibration generating part (175) provides vibration to the horn (171) in the third axial direction (Fx). The third axial direction (Fx) is a direction perpendicular to the first axial direction (Fz) and the second axial direction (Fy), respectively.

In the fifth section (S5), when the welding object (2) is a tab bundle of a pouch-type battery cell, the tab bundle is fused in the first axial direction (Fz), and simultaneously the thickness of the tab bundle is reduced. Accordingly, the pressure value measured in the fifth section (S5) decreases over time.

A sixth section (S6) is a section where, after welding completion, the welding object (2) is cooled in air while the horn (171) is positioned at the welding position for a preset time. The air can naturally cool the welding object (2) while passing through the space between the welding object (2) and the horn (171).

A seventh section (S7) is a section after completion of the welding process. In the seventh section (S7), the horn (171) and the anvil (125) are separated from the welding object (2).

In the seventh section (S7), the rail operating part (163) moves the rail (161) in the second axial direction (Fy) so that the low point portion (161a) of the rail (161) contacts the roller (165), thereby enabling so that the roller (165) rides on the rail surface of the rail (161) and the second support part (130) descends in the Fz1 direction of the first axial direction (Fz).

The first and second support parts (120, 130) are linked to the roller (165) to move in the first axial direction (Fz). In this instance, the second support part (130) descends in the Fz1 direction of the first axial direction (Fz) along with the second guide part (155). Then, the first support part (120) descends in the Fz1 direction of the first axial direction (Fz) along with the first guide part (153).

If the maximum pressure measured while waiting for welding is out of the set value range, the worker can reset the operating conditions of the pressurizing member (173). For this reason, the present invention can improve the welding quality of the welding object (2) by welding the welding object (2) at a pressure optimized for the welding object (2).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the welding device in accordance with at least one example of the present invention, in the welding process of the welding object, it is possible to measure the pressure that the horn pressurizes the welding object in real time, and it is possible to monitor the welding quality based on the measured pressure.

## Claims

1. A welding device comprising: a welding support part including a first support part including an anvil on which a welding object is seated, a second support part including a pressure measuring part measuring a pressure transmitted from the first support part, and a guide part guiding movements of the first support part and the second support part, respectively;
a welding part provided to pressurize the welding object and to apply vibration to the welding object; and
a control part monitoring the measured pressure value of the pressure measuring part.

2. The welding device according to claim 1, wherein
the control part provides a warning alarm to the outside when the maximum pressure measured by the pressure measuring part is out of a preset setting pressure range.

3. The welding device according to claim 1, wherein
the control part adjusts a pressure, in which the welding part pressurizes the welding object, when the maximum pressure measured by the pressure measuring part is out of a preset setting pressure range.

4. The welding device according to claim 1, wherein
the first support part is provided to be movable in a direction closer to or farther away from the second support part, and
the welding support part further comprises an elastic part for elastically connecting the first support part and the second support part.

5. The welding device according to claim 4, wherein the guide part comprises:
at least one first guide part connected to the first support part and guiding movement of the first support part;
at least one second guide part connected to the second support part and guiding movement of the second support part; and
a fixing part in which the at least one first guide part and the at least one second guide part are mounted to be spaced apart from each other.

6. The welding device according to claim 5, wherein
the first guide part and the second guide part are linear guides.

7. The welding device according to claim 1, wherein the welding support part comprises:
a pusher member provided on the first support part and disposed to contact the pressure measuring part when the welding part pressurizes the welding object on the first support part.

8. The welding device according to claim 1, wherein
the second support part comprises an insertion groove into which the first support part is inserted upon movement of the first support part, and a seating groove provided on the bottom surface of the insertion groove and into which the pressure measuring part is mounted, and
the first support part comprises an insertion part provided to be inserted into the insertion groove, and a locking part having a width greater than that of the insertion groove and provided to be caught on the top of the second support part.

9. The welding device according to claim 8, wherein
the first support part is provided with a mounting groove at the bottom of the insertion part to face the seating groove, where
in the mounting groove, a pusher member pressurizing the pressure measuring part when the welding part pressurizes the welding object on the first support part is installed.

10. The welding device according to claim 8, wherein
the first support part is provided so that the insertion part and the locking part are integrally formed, and it is unevenly coupled to the second support part.

11. The welding device according to claim 1, wherein the welding support part further comprises
an elevating part for raising and lowering the second support part, and
is provided so that the first support is linked to the second support to be raised and lowered together upon raising and lowering the second support by the elevating part.

12. The welding device according to claim 11, wherein the elevating part comprises:
a roller installed to enable idling on the second support;
a rail contacting the roller to guide the idling of the roller, and having a low point portion and a high point portion having a height higher than the low point portion; and
a rail operating part for moving the rail so that the roller is located at the high point portion or the low point portion.

13. The welding device according to claim 12, wherein
the elevating part is provided so that the roller pushes the second support part up toward the first support part by moving the rail for the roller to contact the high point portion of the rail before the welding process, and
the elevating part lowers the second support part to be away from the first support part by moving the rail for the roller to contact the low point portion of the rail after completion of the welding process.

14. The welding device according to claim 1, wherein
the control part outputs the maximum pressure, and a pressure graph over time, as measured upon the welding process, based on the pressure data.

15. The welding device according to claim 1, wherein the welding part comprises:
a vibration generating part;
a horn connected to the vibration generating part, and contacting the welding object to transmit vibration to the welding object; and
a pressurizing member installed on the horn, and providing a pressurizing force to the horn so that the horn pressurizes the welding object.
